# EUROPÄISCHE PATENTANMELDUNG

(11) **EP 0 546 538 A1**
(43) Veröffentlichungstag der Anmeldung: **16.06.1993**
(21) Anmeldenummer: 92121055.5
(22) Anmeldetag: 10.12.1992
(51) Int. Cl.: C08J 5/18, C08L 3/14, C08L 3/00, B65D 65/46

(54) **Klarsichtteil sowie Verwendung desselben**

(30) Priorität: 13.12.1991 DE 4141170
(71) Anmelder: EMS-INVENTA AG, CH-8001 Zürich (CH)
(72) Erfinder: Meier, Peter, Dr. Ing. Chem. ETH, CH-8820 Wädenswil (CH)

(57) **Zusammenfassung**

Die Erfindung betrifft ein Klarsichtteil, insbesondere für Verpackungskörper, das aus einer wasserlöslichen biologisch abbaubaren Giessfolie aus einer amylosehaltigen Lösung hergestellt ist. Das erfindungsgemässe Klarsichtteil wird für Briefkuverts, Verpackungsmaterialien mit einer Kartonrückseite und transparenter Klarsichtvorderseite oder für Verpackungsmaterialien aus Karton mit Klarsichtfenstern verwendet. Zum Entsorgen der erfindungsgemässen Klarsichtteile wird das Klarsichtteil enthaltende Material zerkleinert, in Wasser aufgeschlämmt und gerührt, wobei das Klarsichtteil gegebenenfalls unter Erwärmung des Wassers gelöst, anschliessend die Aufschlämmung entwässert und das amylosehaltige Abwasser einer Kläranlage zum biologischen Abbau zugeführt wird. Die gelösten Klarsichtfenster lassen sich somit problemlos über kommunale Kläranlagen entsorgen.

## Beschreibung

Die Erfindung betrifft den in den Patentansprüchen angegebenen Gegenstand. Insbesondere betrifft die Erfindung wasserlösliche und biologisch abbaubare Klarsichtteile, die aus Giessfolien aus amylosehaltigen Lösungen hergestellt sind. Die Erfindung betrifft ferner die Verwendung solcher Klarsichtteile für Briefkuverts, Verpackungsmaterialien mit einer Kartonrückseite und transparenten Klarsichtvorderseiten oder für recyclebare Verpackungsmaterialien aus Karton mit Klarsichtfenstern etc., wobei die Klarsichtteile nach Gebrauch der Verpackungen, Kuverts etc. in Wasser aufgelöst werden können und die gelösten Klarsichtteile sich dann problemlos über kommunale Kläranlagen entsorgen lassen.

Klarsichtteile für Kartonagen- und Papierprodukte haben seit Jahrzehnten einen festen Platz im Verpackungssektor und haben sich bestens bewährt. Vertreter dieses Verpackungstyps sind z.B. Faltschachteln mit Klarsichtfenstern, Blisterverpackungen, die mit Kartonrücken verklebt sind sowie Briefkuverts, die Klarsichtfenster für die Briefadresse aufweisen.

Als Klarsichtteile werden bisher verschiedenste transparente Kunststoff-Folien verwendet, die aus Polyvinylchlorid, Polyestern, Polyethylen, Polypropylen, Polystyrol, Zellglas etc. hergestellt sind. Diese bisher eingesetzten transparenten synthetischen Folien werden in die Karton- und Papierhüllen eingeklebt. Hierfür werden hauptsächlich wasserunlösliche synthetische Klebstoffe, beispielsweise auf Basis von Isocyanaten oder Acrylaten verwendet.

Nach Gebrauch der Verpackungsmaterialien lassen sich diese nicht mehr wiederverwenden, da die Folien die Prozessabläufe in den Altpapieraufbereitungsanlagen durch Verstopfen der Siebe stören bzw. dies Prozessabläufe nicht mehr möglich sind. Ein manuelles, vorgeschaltetes Abtrennen der Folien ist viel zu aufwendig, so dass die in Rede stehenden Verpackungen bisher nur durch Verbrennung und Deponierung entsorgt werden können.

Es ist aber absehbar, dass durch die Gesetzgebung in Zukunft nur noch solche Verpackungsmaterialien erlaubt werden, welche entweder wiederverwertet oder aber auf eine umweltfreundliche Art entsorgt werden können.

Hinzu kommt, dass der Einsatz und die Nutzung nativer Grundstoffe und deren Verwertung zu technischen Produkten bisher nur eine sehr geringe Bedeutung erlangt hat, obgleich diese Rohstoffe in ausreichender Menge und auch zu akzeptablen Preisen erhältlich sind.

Aus der WO 90/13576 ist bekannt, Spezialamylosen bei der Herstellung von Filmen und Folien in einem vereinfachten Giessverfahren zu verwenden. Diese Spezialamylosen werden aus High-Amylose-Maisstärke oder aus High-Amylose-Erbsenstärke erhalten, wobei ein besonderes Ziel der WO 90/13576 ist, ein neues Verfahren zu entwickeln, durch das die Stärke durch Behandlung mit Formamid-Dichloressigsäure in einem Schritt sowohl aufgeschlossen, als auch chemisch verändert werden kann, d.h. nach Zerstörung der kornstrukturellen Stärke insbesondere die Molekulargewichts- und Kettenlängenverteilung der Amylose durch Abbau veränderbar ist. Die WO 90/13576 betrifft somit ausschliesslich die Verbesserung der filmbildenden Eigenschaften der Amylose.

Die der Erfindung zugrundeliegende Problemstellung besteht darin, Klarsichtteile insbesondere für Verpackungskörper, die aus Papier- und Kartonageprodukten bestehen, zur Verfügung zu stellen, die die bisher verwendeten Kunststoffteile durch neuartige, wasserlösliche, biologisch abbaubare Klarsichtteile ersetzen, welche bei der Wiederaufbereitung der Verpackung problemlos entfernt bzw. entsorgt werden können. Diese Klarsichtteile sollen in Verpackungsmaterialien wie Briefkuverts und Verpackungen mit Klarsichtvorderseiten etc. verwendet werden.

Dieses Problem wird durch die kennzeichnenden Merkmale des Anspruchs 1 bzw. 11 gelöst.

Die Unteransprüche enthalten vorteilhafte Ausgestaltungen der Erfindung.

Die Erfindung beruht auf der Feststellung, dass überraschenderweise, basierend auf amylosehaltigen Lösungen wasserlösliche, biologisch abbaubare Giessfolien hergestellt werden können, welche geeignet sind, als Klarsichtfenster in Kartonagen und Papierverpackungen eingesetzt zu werden. Das Giessfolien-Klarsichtteil ist zudem auch tiefziehfähig und kann in Blisterverpackungen eingesetzt werden. Somit kann bei Verpackungsmaterialien, bei welchen vom Inhalt Einsicht genommen werden soll, eine Kombination von preisgünstigen Kartonagen- und Papier-Produkten mit den erfindungsgemässen Klarsichtfenstern aus einer wasserlöslichen und biologisch abbaubaren Giessfolie aus einer amylosehaltigen Lösung eingesetzt werden.

Die bisher verwendeten transparenten Folien aus Kunststoff werden in die Papier- oder Kartonfaltverpackungen mit Kunststoffklebern eingeklebt. Dahingegen können die erfindungsgemässen Klarsichtfenster lediglich mit Wasser, Stärkeleim oder anderen wasserlöslichen Klebstoffen befestigt werden, wodurch der Einsatz von lösungsmittelhaltigen synthetischen Klebstoffen vermieden bzw. die Belastung von Mitarbeitern durch Lösungsmitteldämpfe vermindert wird. Vorteilhaft ist weiterhin, dass nach Gebrauch der Verpakkungsmaterialien die erfindungsgemässen Klarsichtteile problemlos entsorgt werden können, d.h., dass sich die gelösten Klarsichtfenster problemlos über kommunale Kläranlagen entsorgen lassen.

Erfindungsgemäss wird somit ein Klarsichtteil, insbesondere für Verpackungskörper bereitgestellt, wobei diese eine wasserlösliche und biologisch abbaubare, aus einer amylosehaltigen Lösung hergestellte Giessfolie ist. Die amylosehaltige Lösung ist eine wässrige Lösung aus mindestens einer nichtmodifizierten und/oder mindestens einer modifizierten, bevorzugt chemisch modifizierten Amylose und/ oder mindestens einer nicht-modifizierten und/oder mindestens einer modifizierten, bevorzugt chemisch modifizierten Stärke ist.

Die chemisch modifizierte Stärke und/oder chemisch modifizierte Amylose enthält Substituenten aus der Gruppe: 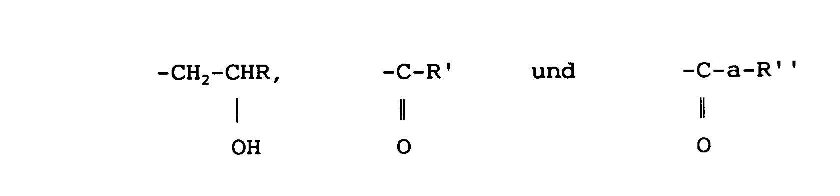 worin
R ein H-Atom oder ein Alkylrest mit 1 bis 18 C-Atomen
R' ein Alkylrest mit 1 bis 18 C-Atomen,
R" eine OH-, OR- oder Polyethergruppe und
a eine Methylen-, Ethylen- oder Isopropylengruppe ist.

Die chemisch modifizierte Amylose und/oder chemisch modifizierte Stärke hat insbesondere einen Substitutionsgrad von 0,01 bis 0,5, bevorzugt 0,03 bis 0,3.

Vorzugsweise besitzt die Stärke einen Amylosegehalt von mindestens 50 Gew.-%, insbesondere von 65 bis 95 Gew.-%. Die amylosehaltige Lösung enthält nach dem Stand der Technik bekannte Additive, insbesondere Weichmacher, wobei die Weichmacher aus Glycerol, Sorbitol, Ethylenglykol, Diethylenglykol, Polyethylenglykol, Polyvinylalkohol oder Gemischen derselben ausgewählt sein können. Ein weiteres bevorzugtes Additiv ist Harnstoff.

Bei der Verwendung zur Herstellung von Klarsichtfolien wird die Amylose und/oder Stärke in einer Mischung mit geeigneten Weichmachern bzw. Additiven eingesetzt. Geeignete Zusammensetzungen der aus den amylosehaltigen Lösungen erhaltenen Giessfolien können 60 bis 91 Gew.-%, insbesondere 65 bis 90 Gew.-% Amylose und/oder Stärke und 9 bis 40 Gew.-%, insbesondere 10 bis 35 Gew.-%, besonders bevorzugt 10 bis 20 Gew.-% eines Additivs, insbesondere eines Weichmachers, enthalten.

Die nach dem Giessverfahren hergestellten Folien und Filme besitzen in der Regel Filmdicken zwischen 20 bis 500 um, insbesondere zwischen 50 bis 200 um, besonders bevorzugt 100 um.

Erfindungsgemäss kann das wasserlösliche und biologisch abbaubare Klarsichtteil zur Herstellung von recyclebaren Briefkuverts, Verpackungsmaterialien mit einer Kartonrückseite und transparenter Klarsichtvorderseite oder recyclebaren Verpackungsmaterialien aus Karton mit Klarsichtfenstern verwendet werden.

Für die Entsorgung der erfindungsgemässen Klarsichtteile kann das Klarsichtteil enthaltende Material zerkleinert, in Wasser aufgeschlämmt und gerührt werden, wobei das Klarsichtteil gegebenenfalls unter Erwärmung des Wassers gelöst wird. Anschliessend wird die Aufschlämmung entwässert und das amylosehaltige Wasser dann einer Kläranlage zum biologischen Abbau zugeführt werden.

Das Aufschlämmen kann auch unter energieintensivem Rühren, bevorzugt in Pulpern oder Fiberizern erfolgen, wobei das Aufschlämmen in alkalischer Lösung, bevorzugt in einem pH-Bereich von ungefähr 8 bis 10,5, insbesondere 9 bis 10 durchgeführt werden kann.

Die Erfindung wird nun durch die nachfolgenden Beispiele näher erläutert.

### I. Herstellung der Giessfolien

### Beispiel 1:

In der Stärkeindustrie werden häufig sogenannte Jetkocher eingesetzt, in denen die nativen Stärkekörner unter Dampfeinleitung und Scherbeanspruchung aufgeschlossen bzw. gelatinisiert werden.

In einem solchen Jetkocher (Fa. EMSLAND-STÄRKE) wurde eine 20 Gew.-%ige Aufschlämmung einer Hydroxypropylmaisstärke mit einem Substitutionsgrad von 0,14 und einem Amylosegehalt von 70 Gew.-% (z.B. Hylon VII, Fa. National Starch) bei 150°C gelatinisiert. Anschliessend wurde eine Giessfolie aus 90 Gew.-% oben genannter gelatinisierter, chemisch modifizierter Hochamylosemaisstärke und 10 Gew.-% Weichmacher gemäss nachfolgender Vorschrift hergestellt: In einem Rundkolben wurden 83,5 g Wasser mit 1,65 g Diethylenglykol versetzt und auf 90°C erwärmt. Unter kräftigen Rühren wurden in diese Lösung 14,85 g der jetgekochten Stärke langsam eingetragen. Anschliessend wurde 60 Minuten lang auf 100°C erhitzt. Die heisse Lösung wurde durch eine Fritte filtriert und aus dem noch warmen Filtrat wurde auf einer ebenen Oberfläche ein Film gegossen, der bei einer Temperatur von 40 bis 70°C im Trockenschrank getrocknet wurde. Nach dem Trocknen wurde eine klare, durchsichtige Folie mit einer Dicke von 100 um von der Oberfläche abgezogen.

### Beispiel 2:

Nach der im Beispiel 1 beschriebenen Vorschrift wurde aus einer Lösung aus 82,0 g Wasser, 1,5 g Glycerol, 1,5 g Sorbitol und 15 g oben genannter jetgekochter Hydroxypropylmaisstärke eine Giessfolie, welche aus 83,4 g Gew.-% chemisch modifizierter Stärke und 16,6 Gew.-% Weichmacher besteht, hergestellt.

### Beispiel 3:

Nach der im Beispiel 1 beschriebenen Vorschrift wurde aus einer Lösung aus 81,25 g Wasser, 3,75 g Glycerol und 15 g jetgekochter Hydroxyethylerbsenstärke mit einem Substitutionsgrad von 0,12 und einem Amylosegehalt von 65 Gew.-% eine Giessfolie, welche aus 80 Gew.-% chemisch modifizierter Stärke und 20 Gew.-% Weichmacher besteht, hergestellt.

### Beispiel 4:

Nach der im Beispiel 1 beschriebenen Vorschrift wurde aus einer Lösung aus 83,5 g Wasser, 1,5 g Polyvinylalkohol und 15 g jetgekochter Hydroxypropylmaisstärke mit einem Substitutionsgrad von 0,09 und einem Amylosegehalt von 50 Gew.-% eine Giessfolie, welche aus 90,9 Gew.-% chemisch modifizierter Stärke und 9,1 Gew.-% Weichmacher besteht, hergestellt.

### Beispiel 5:

Nach der im Beispiel 1 beschriebenen Vorschrift wurde aus einer Lösung aus 81,25 g Wasser, 3,75 g Ethylengykol und 15g jetgekochtem Stärkeacetat mit einem Substitutionsgrad von 0,11 und einem Amylosegehalt von 85 Gew.-% eine Giessfolie, welche aus 80 Gew.-% chemisch modifizierter Stärke und 20 Gew.-% Weichmacher besteht, hergestellt.

### Beispiel 6:

Aus 15 g Hydroxypropylkartoffelamylose (z.B. Avebe HE 15 UZ, Fa. AVEBE), 3,75 g Ethylenglykol und 81,25 g Wasser wurden bei 95 _{°} C unter kräftigen Rühren eine homogene Lösung hergestellt und hieraus gemäss Beispiel 1 ein Giessfilm hergestellt, welcher aus 80 Gew.-% chemisch modifizierter Amylose und 20 Gew.-% Weichmacher besteht.

### Beispiel 7:

Nach der im Beispiel 1 beschriebenen Vorschrift wurde aus einer Lösung aus 81,25 g Wasser, 3,75 g Glycerol und 15 g jetgekochter Kartoffelamylose eine Giessfolie, welche aus 80 Gew.-% unmodifizierter Amylose und 20 Gew.-% Weichmacher besteht, hergestellt.

### Beispiel 8:

Nach der im Beispiel 1 beschriebenen Vorschrift wurde aus einer Lösung aus 81,25 g Wasser, 3,75 g Glycerol und einer jetgekochten Mischung aus 7,5 g Hydroxypropylmaisstärke mit einem Substitutionsgrad von 0,14 und einem Amylosegehalt von 70 Gew.-% und 7,5 g Maisstärke mit einem Amylosegehalt von 70 Gew.-% eine Giessfolie hergestellt, welche aus 40 Gew.-% chemisch modifizierter Stärke, 40 Gew.-% unmodifizierter Stärke und 20 Gew.-% Weichmacher besteht.

### Beispiel 9:

Nach der im Beispiel 1 beschriebenen Vorschrift wurde aus einer Lösung aus 70 g Wasser, 2,5 g Glycerol, 2,5 g Harnstoff und einer jetgekochten Mischung aus 12,5 g Stärkeacetat mit einem Substitutionsgrad von 0,11 und einem Amylosegehalt von 85 Gew.-% und 12,5 g Hydroxypropylmaisstärke mit einem Substitutionsgrad von 0,13 und einem Amylosegehalt von 15 Gew.-% eine Giessfolie hergestellt, welche aus 41,7 Gew.-% einer chemisch modifizierten Stärkesorte und 41,7 Gew.-% einer zweiten chemisch modifizierten Stärkesorte und 16,6 Gew.-% Additiven besteht.

### 11. Herstellung erfindungsgemässer Verpackungskörper

Die gemäss den Beispielen 1 bis 9 hergestellten Giessfolien können in erfindungsgemässe Verpakkungskörper eingeklebt, d.h. mit Wasser, Stärkeleim oder anderen wasserlöslichen Klebstoffen befestigt werden.

### 111. Wiederaufbereitung erfindungsgemässer Verpackungs körper

### Beispiel 10:

5 kg Briefkuverts, versehen mit Klarsichtfenstern einer 100 um starken Stärkegiessfolie gemäss Beispiel 1 wurden in einem Laborpulper in 200 I Wasser (pH 10, eingestellt mit Kalkhydrat) von 60 _{°} C während 15 Minuten behandelt. Anschliessend wurde die Fasersuspension über einen Entstipper im Kreislauf wieder zurück in den Pulper geleitet und während 15 Minuten weiter gepulpt. Nach der Entwässerung der Faseraufschlämmung können diese direkt einer Kartonage- oder Papierproduktion zugeführt werden.

## Patentansprüche

1. Klarsichtteil, insbesondere für Verpackungskörper, dadurch gekennzeichnet, dass es eine wasserlösliche und biologisch abbaubare, aus einer amylosehaltigen Lösung hergestellte Giessfolie ist.

2. Klarsichtteil gemäss Anspruch 1, dadurch gekennzeichnet, dass die amylosehaltige Lösung eine wässrige Lösung aus mindestens einer nicht-modifizierten und/oder mindestens einer modifizierten, bevorzugt chemisch modifizierten Amylose und/oder mindestens einer nichtmodifizierten und/oder mindestens einer modifizierten, bevorzugt chemisch modifizierten, Stärke ist.

3. Klarsichtteil gemäss Anspruch 2, dadurch gekennzeichnet, dass die chemisch modifizierte Stärke und/ oder chemisch modifizierte Amylose Substituenten aus der Gruppe: 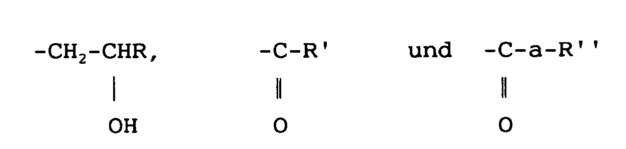 enthält, worin
R ein H-Atom oder ein Alkylrest mit 1 bis 18 C-Atomen,
R' ein Alkylrest mit 1 bis 18 C-Atomen,
R" eine OH-, OR- oder Polyethergruppe und
a ein Methylen-, Ethylen- oder Isopropylengruppe ist.

4. Klarsichtteil gemäss den Ansprüchen 2 bis 3, dadurch gekennzeichnet, dass die chemisch modifizierte Amylose und/oder chemisch modifizierte Stärke einen Substitutionsgrad von 0,01 bis 0,5, bevorzugt 0,03 bis 0,3, besitzt.

5. Klarsichtteil gemäss den Ansprüchen 2 bis 4, dadurch gekennzeichnet, dass die Stärke einen Amylosegehalt von mindestens 50 Gew.-%, vorzugsweise mindestens 65 Gew.-%, besitzt.

6. Klarsichtteil gemäss den Ansprüchen 1 bis 5, dadurch gekennzeichnet, dass die amylosehaltige Lösung nach dem Stand der Technik bekannte Additive, insbesondere Weichmacher und Harnstoff enthält.

7. Klarsichtteil gemäss Anspruch 6, dadurch gekennzeichnet, dass der Weichmacher aus Glycerol, Sorbitol, Ethylenglykol, Diethylenglykol, Polyethylenglykol, Polyvinylalkohol oder Gemischen derselben ausgewählt ist.

8. Klarsichtteil gemäss einem der Ansprüche 1 bis 7, dadurch gekennzeichnet, dass das Klarsichtteil bzw. die Giessfolie 60-91 Gew.-%, insbesondere 65-90 Gew.-%, besonders bevorzugt 80-90 Gew.-%, Amylose und/oder Stärke und 9-40 Gew.-%, insbesondere 10 bis 35 Gew.-%, besonders bevorzugt 10-20 Gew.-% eines Additivs, insbesondere eines Weichmachers, enthält.

9. Klarsichtteil gemäss einem der vorhergehenden Ansprüchen 1 bis 8, dadurch gekennzeichnet, dass das Giessfolien-Klarsichtteil einer weiteren Formgebung, insbesondere Tiefziehen oder Schrumpfen, unterworfen wurde.

10. Klarsichtteil gemäss einem der vorhergehenden Ansprüche 1 bis 10, dadurch gekennzeichnet, dass die Filmdicke der Giessfolie zwischen 20 bis 500 um, insbesondere zwischen 50 bis 200 um, besonders bevorzugt 100 um, liegt.

11. Verwendung des Klarsichtteils gemäss einem der Ansprüche 1 bis 10 zur Herstellung von recyclebaren Briefkuverts, Verpackungsmaterialien mit einer Kartonrückseite und transparenter Klarsichtvorderseite oder Verpackungsmaterialien aus Karton mit Klarsichtfenstern.
